# EUROPEAN PATENT APPLICATION

(11) **EP 4 796 719 A1**
(43) Date of publication of application: **26.08.2026**
(21) Application number: 26160099.3
(22) Date of filing: 23.02.2026
(51) Int. Cl.: E03B 7/07, E03B 7/12, E03B 9/02, E03B 9/14

(54) **OUTDOOR VALVE SYSTEM FOR PROVIDING WATER, A METHOD FOR PASSIVELY DRAINING AN OUTDOOR VALVE SYSTEM, AND USE OF A DRAIN VALVE**

(30) Priority: 24.02.2025 DK PA202530116
(71) Applicant: Frostline A/S, 8000 Aarhus C (DK)
(72) Inventor: Thorsen, Roland, 9000 Aalborg (DK)
(74) Representative: Patrade A/S

(57) **Abstract**

An outdoor valve system for providing water, the outdoor valve system (100) comprising:
- an inlet (102) for receiving water from a water supply and an outlet (104) being in liquid communication with the inlet (102) along a channel (106),
- a flow constricting unit (108) positioned along the channel (106) between the inlet (102) and the outlet (104), wherein the flow constricting unit (108) is configured to increase pressure between the inlet (102) and the flow constricting unit (108) during flow from the inlet (102) to the outlet (104), and
- a drainage valve (110) connected to the channel (106) between the inlet (102) and the flow constricting unit (108), wherein the drainage valve (110) being configured to close above a threshold pressure between the inlet (102) and the flow constricting unit (108) and open below a threshold pressure.

## Description

### Field of the Invention

The present invention relates to an outdoor valve system that is frost-resistant comprising an inlet for receiving water, an outlet being in liquid communication with the inlet. Along the channel a flow constricting unit is placed and configured to regulate the pressure between the inlet and the flow constricting unit. Furthermore, a drainage valve is connected to the channel between the inlet and the flow constricting unit. This drainage valve is configured to be open when the pressure between the inlet and the flow constricting unit is below a threshold and closed if the pressure is above the threshold. The outdoor valve system is at least partly placed below a soil frost line when installed.

### Background of the Invention

Outdoor valve systems are widely used worldwide to provide access to water outside, whether it's for drinking fountains, washing cars, or watering the garden.

However, as these outdoor valve systems are commonly placed in the ground, the water systems face a high risk of freezing during winter or cold weather. Furthermore, if these systems retain water, the freezing and subsequent expansion can lead to significant damage of the water system.

One way to solve this problem is to make sure that there is no water present in the water system after use. In this way the damage caused by expansion of the water can be avoided.

Currently, several solutions are available on the market for emptying watering systems. These solutions often use a valve with a thermal sensor that opens when it detects near-freezing temperatures in the surrounding soil, thereby draining water from the system. However, this system is active and requires power for operation of the thermal sensor and valve. This dependency makes the system vulnerable to power loss or electronic malfunctions, which could prevent the system from being drained, thereby increasing the risk of damage to the surrounding systems. Furthermore, to use the thermal sensor valve during the period when it is open is not possible without losing water or not possible at all.

Consequently, a new type of outdoor valve system that can both passively drain the surrounding system when not in use and still be usable during freezing temperatures without loss of water is needed.

### Object of the Invention

One objective of the present disclosure is to overcome one or more of the above-mentioned drawbacks known from frost-resistant outdoor valve systems for providing water.

One objective is to achieve an outdoor valve system with a passive drainage valve that offers reliant frost-resistance of the surrounding system without the need for power or wires, while still being fully functional in freezing temperatures.

Further objectives may include to achieve an outdoor valve system that does not require the same amount of maintenance as active draining systems, as these valve systems are not easily accessible.

### Description of the Invention

One objective of the invention is achieved by an outdoor valve system for providing water. The outdoor valve system comprises:
- An inlet for receiving water from a water supply and an outlet being in liquid communication with the inlet along a channel.
- A flow constricting unit positioned along the channel between the inlet and the outlet. The flow constricting unit is configured to increase pressure between the inlet and the flow constricting unit during flow from the inlet to the outlet.
- A drainage valve connected to the channel between the inlet and the flow constricting unit. The drainage valve being configured to close above a threshold pressure between the inlet and the flow constricting unit and open below a threshold pressure.

One purpose of the outdoor valve system is to provide water. As the outdoor valve system provides water, water may build up in the outdoor valve system and could remain in the valve after the outdoor valve system stops providing water. Standing water in outdoor valve system may cause several issues such as:
- prolonged exposure to water may damage the outdoor valve system, such as causing erosion, or
- harbouring bacteria or other pathogens in the outdoor valve system.

Thus, it is important to remove the standing water in the outdoor valve system after use. An advantage of using a pressure sensitive drainage valve in the outdoor valve system is that the drainage valve can open and close in response to a threshold pressure. Thereby, remove water from outdoor valve system passively.

Well-known alternatives for outdoor valve systems with a drainage valve, generally utilize an active draining system, for example a temperature sensor, to open or close a drainage valve. Active drainage valves may require regular maintenance, as they often require power in the form of e.g. a battery that needs to be replaced. Using a passive drainage valve, such as the one disclosed in this invention reduces or eliminate the need for maintenance, and the damage that may occur in cases of missing or poor maintenance.

In addition, the passive drainage system of the outdoor valve system may work in all external conditions. Standing water in the outdoor valve system may not only be an issue in cold environments but also in warmer environments. As the outdoor valve system of this invention is passively drained based on an internal condition, the outdoor valve system does not rely on external conditions. With the outdoor valve system of this invention, the outdoor valve system is drained in all conditions and therefore reduces the risk of standing water in all external conditions. This is especially useful for outdoor valve systems that are rarely used, as the longer standing water is present in the outdoor valve system may increase the risk of damage.

As the opening and closing of the passive drainage valve may be dependent on the pressure between the inlet and the constriction unit, calibration may be critical. Consequently, it may be important to have the liquid flow through the inlet, the restriction of flow by the constriction unit, and the threshold for opening and closing of the drainage valve calibrated according to each other. This calibration will ensure that liquid is drained from the outdoor valve system optimally, preventing waste of liquid and reducing risk of standing water in the outdoor valve system.

A skilled person in the art would know that it may be important to consider the geographical frost line when installing the outdoor valve system in the ground. Furthermore, the soil type and density also affect the thermal conductivity of the soil, and thereby the depth of the frost line. As the outdoor valve system may not function in a frozen state, it is important that all the features of the outdoor valve system are placed under the frost line when installed. It may be viable to install the outdoor valve system, with only the drainage valve under the frost line. However, installing only the drainage valve under the frost line might cause the rest of the outdoor valve system to freeze and compromise drainage of the outdoor valve system.

The constriction unit may be placed substantially near the drainage valve. By placing the constriction unit closer to the drainage valve a faster response is achieved. This in turn results in less waste of water, as for example, when the outdoor valve system changes to provide water, the drainage valve will be closed faster.

In an aspect of the outdoor valve system, the constriction unit is a globe valve, needle valve, butterfly valve, automatic flow control valve, orifice plate, adjustable regulators, actuator assisted valves or variable orifice throttles.

In another aspect, the constriction may be an orifice plate with an aperture with a diameter between 3 to 9 millimetres, or between 5 to 7 millimetres.

In an aspect, the drainage valve may be connected to the channel connections such as, threaded connections, welding, push-to-connect, compression fittings, flanges, unions, or couplings.

The liquid as described is water or substantially water, such as tap water.

In a further embodiment of the outdoor valve system, the outdoor valve system has two states:
- an active state, wherein a liquid flows through the inlet and the drainage valve is closed when the pressure between the inlet and the flow constricting unit is above a threshold, and
- a standby-state, where no liquid flows through the inlet and the drainage valve is open when the pressure between the inlet and the flow constricting unit is below a threshold.

In general, outdoor valve systems can be found in two different situations, one where a liquid flows into the outdoor valve system or one where no liquid flows into the outdoor valve system. These two situations create two different states for the outdoor valve system of this invention as described above. The two states of the outdoor valve system, induces two different states, that may determine the pressure between the drainage valve and the constriction unit and thus effect the open or close state of the drainage valve. This is an advantage as the opening and closing of the drainage valve in the outdoor valve system of this invention is not affected by outside conditions. This creates a more stable and reliant drainage of the outdoor valve system.

Generally, other outdoor valve systems with active draining systems are often limited to be open or closed based on external conditions. Considering an example where the active drainage system is based on temperature, the active drainage valve is always open when the temperature reaches below a certain threshold. Thus, the active drainage system could be draining even when the outdoor valve system provides water. However, using the outdoor valve system disclosed in this invention ensures that the drainage valve is closed when the outdoor valve system provides water in all external conditions, thereby reducing water waste.

In a further embodiment of the outdoor valve system, the outlet is arranged to be connected with other liquid delivering systems at an outlet attachment point e.g. a faucet, and/or a hose, and/or a fountain and/or a shower head.

When the outdoor valve system deliver water to liquid delivering systems, water may also build up in these liquid delivering systems. When the outdoor valve system stops providing water, water will remain in these liquid delivering systems. The water remaining in the liquid delivering system will become standing water, thereby being susceptible to the same issues as standing water in the outdoor valve system. Generally, prior art outdoor valve systems with a draining system, which also is frost resistant, only drains water when activated by an external factor, such as temperature. This may be an issue if the external factor is not met and the liquid delivering system is not drained. However, the outdoor valve system disclosed in this invention will always drain both the outdoor valve system and the liquid delivery system after use, in all external conditions.

It is well known that outdoor liquid delivering systems may be exposed to freezing for the part of the liquid delivering system that are above the frost line. If standing water is present, freezing of the liquid delivering system may risk bursting. In cases where the liquid delivering system is connected to the outdoor valve system this will not be an issue, as draining is achieved passively. Furthermore, as the draining is passive, there is no risk of malfunctioning due to external factors, such as loss of power.

In an aspect, the outdoor valve system may be connected with the other liquid delivery systems such as, threaded connections, welding, push-to-connect, compression fittings, flanges, unions, or couplings.

In an embodiment of the outdoor valve system, the drainage valve is connected to the channel at or below the inlet.

After the outdoor valve system has provided water to for example a liquid delivery system, the outdoor valve system will start to drain water from the liquid delivery system and the outdoor valve system. It is important that all water is drained from the liquid delivery system and the outdoor valve system, to prevent the issues that may be linked to standing water. Thus, to achieve a fully passive system, the placement of the drainage valve is important to avoid the need of actively moving standing water. By placing the drainage valve at or below the inlet and having a pressure responsive open/closing mechanism, a fully passive drainage system is achieved. Preferably, the drainage valve is placed below the inlet, for the most effective draining of the outdoor valve system.

In an embodiment of the outdoor valve system, the outdoor valve system comprises:
- a water supply mechanism with an inflow valve controlling the inflow of water into the water supply mechanism. The water supply mechanism is being connected to the inlet and
- control means configured to open and close the inflow valve.

As the outdoor valve system needs an inflow of water to be able to provide water, a water supply mechanism may may be connected to the inlet of the outdoor valve system. As the water supply mechanism comprises an inflow valve able to control and direct an inflow of water, by connecting it to the outflow valve, water can be provided from the outdoor valve system.

As the outdoor valve system and water supply mechanism generally is installed in the ground, there may be a need for a controller reachable from above the ground to control the flow of water into the outdoor valve system.

In an aspect of the outdoor valve system, the control means is chosen amongst an electronical controller and/or mechanical controllers and/or a spindle, and/or a motor controlled by an app, and/or a motor controlled by buttons, and/or a ball valve with a handle.

The controller can control the inflow valve to provide or not provide water. By being connected with the outdoor valve system, the control of the inflow valve can control the outdoor valve system to provide or not to provide water. This ensures that the outdoor valve system is able to function as intended, with an easy access point.

In an embodiment of the outdoor valve system, the drainage valve comprises a ball check valve, a disc check valve, a swing check valve, a spring check valve, a wafer check valve, a piston check valve, or a diaphragm valve.

Typically, the drainage valve comprises a ball check valve or a piston check valve. In one embodiment of the drainage valve, the drainage valve may be activated by biasing means. The biasing means may be in the form of a spring. Thus, when the constricting unit restricts liquid flow there will be an increase in the liquid pressure between the constricting unit and the inlet. This increased liquid pressure may at a threshold force in a ball check valve with a spring, thereby closing the drainage valve. When the liquid flow stops and the pressure decrease below a threshold, the spring will be released and open the ball check valve to drain the outdoor valve system, thereby draining the outdoor valve system passively.

The above-mentioned valves may be one-way valves. Using a one-way valve minimizes the risk of contamination from the outside, as the one-way valve prevents contaminated liquid from outside getting into the outdoor valve system.

In an embodiment of the outdoor valve system, a one-way valve is arranged between the inlet and the channel.

When providing water it is important that water does not flow back into the inlet and back to the source. This is also called backflow. Backflow may be harmful and cause health issues due to contamination of the water source, such as Legionnaires' disease. Such contamination of the water source could turn into a public issue, as most water sources are shared between multiple people. One way to safeguard against backflow may be to use a one-way valve arranged at the inlet. As one-way valves only allow flow in one direction, the one-way valve can thereby prevent backflow and the issues related thereto.

In an aspect of the outdoor valve system, the one-way valve could be valves such as, but not limited to, ball check valves, swing check valves, diaphragm valves, lift check valves, wafer check valves, duckbill check valves, stop-check valves, or in-line check valves.

The one-way valve ensures that there is no water backflow, thereby greatly reducing the risk of contaminating the water flow to a household.

A further objective of the invention is achieved by a water distribution system for providing water. The water distribution system for providing water comprising the outdoor valve system according to one or more of claims 1-7 and an outlet installation connected to the outlet.

Having the whole water distribution system together may provide a functional water providing system, where the system provide water through a liquid delivery system when activated by a controller. While the liquid delivery system provides water, the outdoor valve system, stops water from flowing out the drainage valve. When the controller is deactivated the liquid delivery systems stops providing water, and the outdoor valve system drains water from the liquid delivery system and the outdoor valve system. This is done through an open drainage valve.

In an aspect, the outlet installation could be, pipes, hoses, faucets, showers, hydrants, water tanks, spigots, or any combination.

A further objective of the invention is achieved by a method for passively draining an outdoor valve system, the method comprises steps of:
- providing a liquid flow between an inlet and an outlet of an outdoor valve system;
- constricting the liquid flow at a section between the inlet and the outlet, thereby increasing the liquid pressure between the inlet and the section;
- closing a drainage valve positioned between the inlet and the section by use of the increased liquid pressure;
- stopping the liquid flow;
- opening the drainage valve by use of lowering of the liquid pressure, thereby causing drainage of liquid from the outdoor valve system, wherein the inlet and the drainage valve are positioned below a soil frost line.

When the outdoor valve system is providing water, liquid pressure will build up in the section between the inlet and the constricting unit. This will subsequently result in a closing of the drainage valve, when a liquid pressure threshold is reached. Water thereby is not wasted during use. When the outdoor valve system stops providing water, liquid pressure will fall below a liquid pressure threshold, opening the drainage valve and thereby start draining the outdoor valve system. In that way the outdoor valve system is drained when not in use, thereby avoiding issues related to standing water in the outdoor valve system. This opening and closing of the drainage valve occurs without active intervention and thus happens passively.

The above-mentioned advantages of the outdoor valve system according to the present invention offer the same benefits linked to the present method of draining an outdoor valve system passively.

Use of a drainage valve configured to close above a threshold pressure and open below the threshold pressure to drain at least part of a channel of an outdoor valve system, wherein the drainage valve is positioned below a frost line.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: Illustrates an embodiment of the outdoor valve system in an open configuration.
- Fig. 2: Illustrates an embodiment of the outdoor valve system in a closed configuration.
- Fig. 3: Illustrates an embodiment of the outdoor valve system.
- Fig. 4: Illustrates a method for passively draining an outdoor valve system.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises", "comprising", "includes", and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.
- No.: Item
- 100: Outdoor valve system
- 102: Inlet
- 104: Outlet
- 106: Channel
- 108: Flow constricting unit
- 110: Drainage valve
- 112: Outlet attachment point
- 200: Water supply mechanism
- 202: One-way valve
- 204: Inflow valve
- 300: Control means
- 302: Liquid delivery system
- 400: Soil frost line
- 402: Soil surface

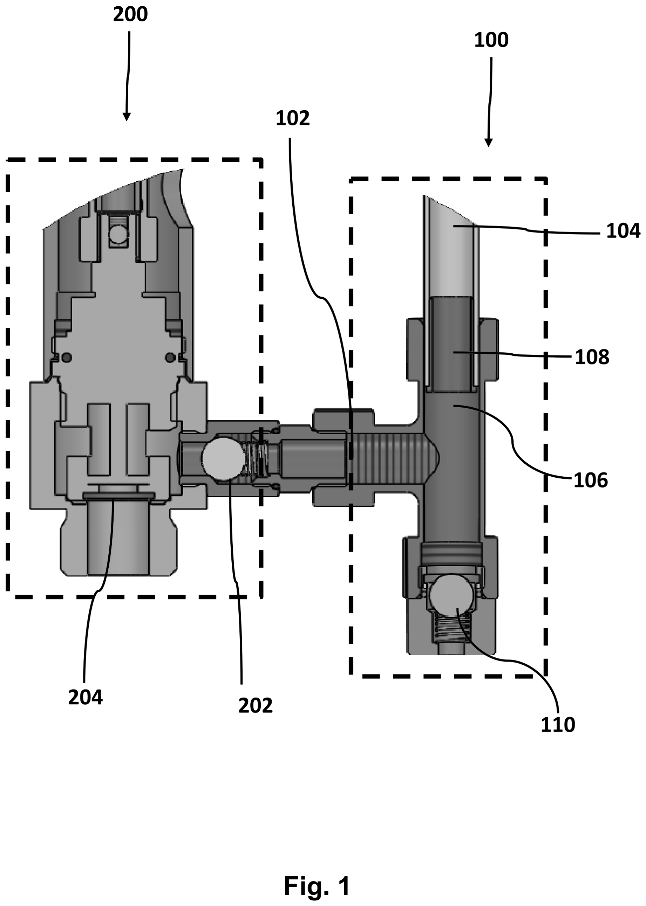

Figure 1 illustrates one embodiment of the outdoor valve system 100 in an open drainage valve 110 configuration. The embodiment shows the outdoor valve system 100, with its inlet 102 connected to a water supply mechanism 200 and an outlet 104. In between the inlet 102 and the outlet 104 there is a channel 106 creating a liquid communication. A flow constricting unit 108 is placed along the channel 106 between the inlet 102 and the outlet 104, where the flow constricting unit 108 can be placed anywhere along the channel 106, however preferably close to the inlet 104. Next, the drainage valve 110 is connected to the channel 106 between the inlet 102 and the flow constricting unit 108 can be placed anywhere along the channel 106. However, the best effect is achieved if the drainage valve 110 is placed at or below the inlet 102. The water supply mechanism 200 is preferably connected to the inlet 102 through a one-way valve 202. Additionally, an inflow valve 204 is attached someplace on the water supply mechanism 200 but could also be placed directly at the inlet 102. In figure 1, the embodiment of the outdoor valve system 100 is in an open configuration which is characterized by a closed one-way valve 202 and an open drainage valve 110, resulting in liquid being drained from the outdoor valve system 100.

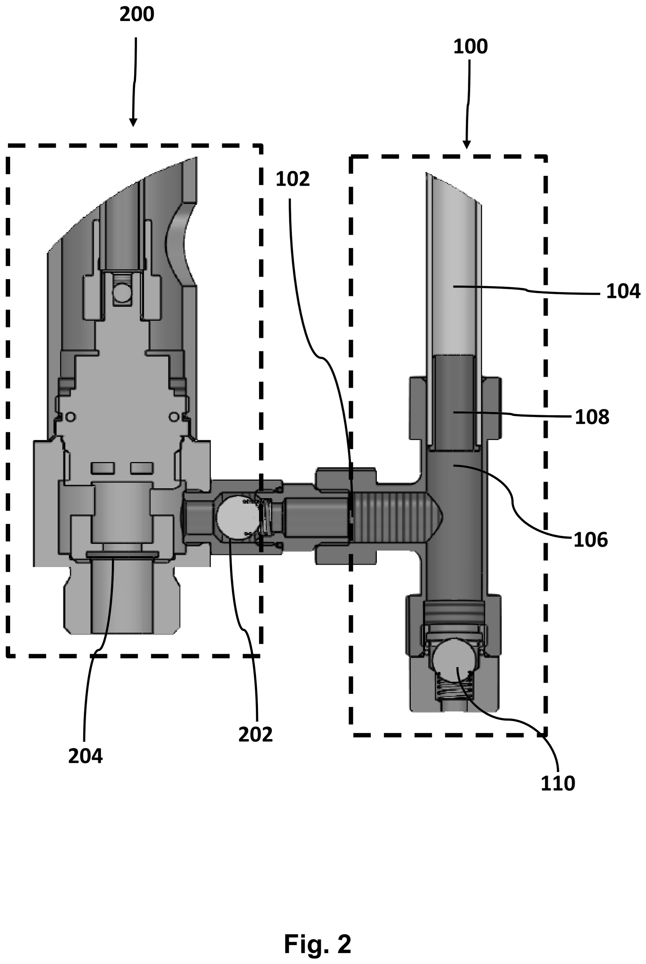

Figure 2 illustrates on embodiment of the outdoor valve system 100 in a closed drainage valve 110 configuration. The embodiment shows the outdoor valve system 100, with its inlet 102 connected to a water supply mechanism 200, and an outlet 104. In between the inlet 102 and the outlet 104 there is a channel 106 creating a liquid communication. A flow constricting unit 108 is placed along the channel 106 between the inlet 102 and the outlet 104, where the flow constricting unit 108 can be placed anywhere along the channel 106, however preferably close to the inlet 104. Next, the drainage valve 110 is connected to the channel 106 between the inlet 102 and the flow constricting unit 108 could be placed anywhere along the channel 106 but the best effect is achieved if the drainage valve 110 is placed at or below the inlet 102. The water supply mechanism 200 is preferably connected to the inlet 102 through a one-way valve 202. Additionally, an inflow valve 204 is attached someplace on the water supply mechanism 200 but could also be placed directly on the inlet 102. In figure 2, the embodiment of the outdoor valve system 100 is in a closed configuration which is characterized by an open one-way valve 202 and a closed drainage valve 110, resulting in liquid being able to flow from the inlet 102 to the outlet 104 without draining the outdoor valve system 100.

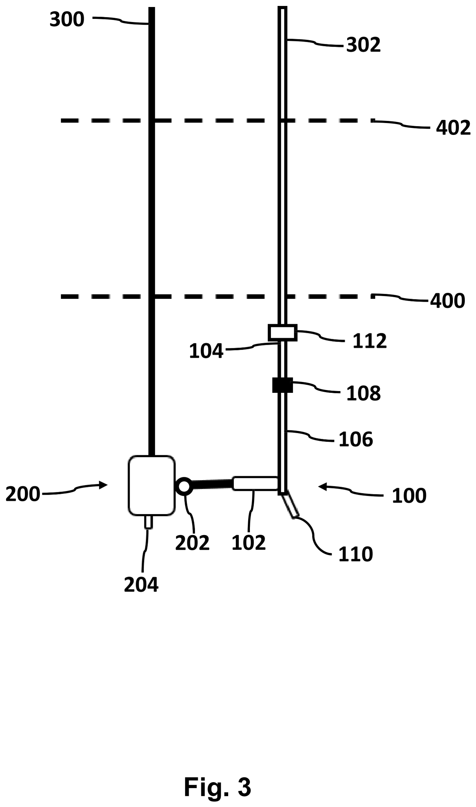

Figure 3 illustrates an embodiment of the outdoor valve system 100. The embodiment shows the outdoor valve system 100, with an inlet 102, an outlet 104 which is be placed below the frost line 400. A channel 106 that runs between the inlet 102 and the outlet 104 and along the channel 106 a flow constricting unit 108 is placed, which is be placed below the frost line 400 however, preferably close to the inlet 102. A drainage valve 110 is connected to the channel 106 between the inlet 102 and the outlet 104. The drainage valve 110 may be connected to the channel 106 at a point at the inlet 102 or preferably gravitationally below. The outdoor valve system 100 may be connected to a water supply mechanism 200 at the inlet 102. The water supply mechanism 200 might have a one-way valve 202 at the connection to the inlet 102 of the outdoor valve system 100. Furthermore, there may be an inflow valve 204, which may be supplying water into the water supply mechanism 200, which is controlled by control means 300 above the soil surface 402. The outdoor valve system 100 can be connected to a liquid delivery system 302 that reaches above the soil surface 402 and connected in the outlet attachment point 112 at the outlet 104. This outlet attachment point 112 can be placed both above and below the soil surface 402 or above or below the soil frost line 400.

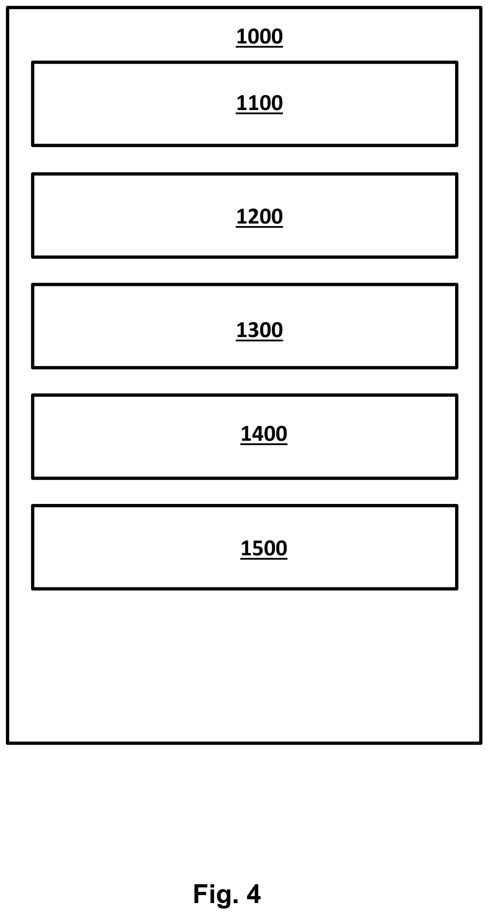

Fig. 4 illustrates a method 1000 for passively draining an outdoor valve system 100. The first step is to provide 1100 a liquid flow between an inlet 102 and an outlet 104 of the outdoor valve system 100. Thereafter, the outdoor valve system is constricting 1200 the flow at a section between the inlet 102 and the outlet 104, which will increase the liquid pressure between the inlet 102 and the section. This increased liquid pressure will cause closing 1300 of the drainage valve 110, which is positioned between the inlet 102 and the section. Next, the liquid flow is stopping 1400.

The stopping 1400 of liquid flow will cause an opening 1500 of the drainage valve 110 by using the lowered liquid pressure, resulting in drainage of liquid from the outdoor valve system 100. The inlet 102 and the drainage valve are positioned below a soil frost line 400.

## Claims

1. An outdoor valve system for providing water, the outdoor valve system (100) comprising:
- an inlet (102) for receiving water from a water supply and an outlet (104) being in liquid communication with the inlet (102) along a channel (106),
- a flow constricting unit (108) positioned along the channel (106) between the inlet (102) and the outlet (104), wherein the flow constricting unit (108) is configured to increase pressure between the inlet (102) and the flow constricting unit (108) during flow from the inlet (102) to the outlet (104), and
- a drainage valve (110) connected to the channel (106) between the inlet (102) and the flow constricting unit (108), wherein the drainage valve (110) being configured to close above a threshold pressure between the inlet (102) and the flow constricting unit (108) and open below a threshold pressure.

2. The outdoor valve system according to claim 1, wherein the outdoor valve system has two states:
- an active-state, wherein a liquid flows through the inlet (102), and the drainage valve (110) is closed when the pressure between the inlet (102) and the flow constricting unit (108) is above a threshold, and
- a standby-state, wherein no liquid flows through the inlet (102), and the drainage valve (110) is open when the pressure between the inlet (102) and the flow constricting unit (108) is below a threshold.

3. The outdoor valve system according to claim 1 or 2, wherein the outlet (104) is arranged to be connected with other liquid delivering systems (302) at an outlet attachment point (112) e.g. a faucet, and/or a hose, and/or a fountain and/or a shower head.

4. The outdoor valve system according to any preceding claim, wherein the drainage valve (110) is connected to the channel (106) at or below the inlet (102).

5. The outdoor valve system according to any preceding claim, wherein the outdoor valve system (100) comprises:
- a water supply mechanism (200) with an inflow valve (204) controlling the inflow of water into the water supply mechanism (200), the water supply mechanism (200) being connected to the inlet (102), and
- control means (300) configured to open and close the inflow valve (204).

6. The outdoor valve system according to any preceding claim, wherein the drainage valve (110) comprises:
- a ball check valve, or
- a disc check valve, or
- a swing check valve, or
- a spring check valve, or
- a wafer check valve or
- a piston check valve, or
- a diaphragm valve.

7. The outdoor valve system according to any preceding claim, wherein a one-way valve (202) is arranged between the inlet (102) and the channel (106).

8. A water distribution system for providing water, the water distribution system for providing water comprising the outdoor valve system (100) according to one or more of claims 1-7 and an outlet installation connected to the outlet (104).

9. A method (1000) for passively draining an outdoor valve system (100), the method comprises steps of:
- providing (1100) a liquid flow between an inlet (102) and an outlet (104) of an outdoor valve system (100);
- constricting (1200) the liquid flow at a section between the inlet (102) and the outlet (104), thereby increasing liquid pressure between the inlet (102) and the section;
- closing (1300) a drainage valve (110) positioned between the inlet and the section by use of the increased liquid pressure;
- stopping (1400) the liquid flow;
- opening (1500) the drainage valve (110) by use of lowering of the liquid pressure, thereby causing drainage of liquid from the outdoor valve system, wherein the inlet (102) and the drainage valve are positioned below a soil frost line (400).

10. Use of a drainage valve (110) configured to close above a threshold pressure and open below the threshold pressure to drain at least part of a channel (106) of an outdoor valve system (100), wherein the drainage valve (110) is positioned below a frost line (402).
